Europäisches Patentamt

European Patent Office

Office européen des brevets

(11) Numéro de publication: **0 420 769 A2**

# (12) DEMANDE DE BREVET EUROPEEN

(21) Numéro de dépôt: 90420404.7

(22) Date de dépôt: 14.09.90

(51) Int. Cl.5: **B23D 55/04**, //B27B27/02

(30) Priorité: 26.09.89 FR 8913227

(43) Date de publication de la demande:
03.04.91 Bulletin 91/14

(84) Etats contractants désignés:
BE CH DE ES GB IT LI LU NL

(71) Demandeur: **SERTIM TEVAL**
**7 rue de la Libération**
**F-69270 Fontaines sur Saone(FR)**

(72) Inventeur: **Tavernier, Bernard**
**7 Chemin de Grave**
**F-69450 Saint-Cyr Au Mont D'Or(FR)**

(74) Mandataire: **Maureau, Philippe et al**
**Cabinet GERMAIN & MAUREAU BP 3011**
**F-69392 Lyon Cédex 03(FR)**

(54) Procédé de tranchage d'un panneau en fibres minérales et dispositif pour sa mise en oeuvre.

(57) Le procédé de tranchage dans le sens de son épaisseur d'un panneau en fibres minérales consiste à amener ce panneau 7 en position verticale et à le trancher dans cette position par déplacement relatif vis à vis d'un outil de tranchage également d'orientation verticale.

Ce dispositif de mise en oeuvre du procédé comprend en combinaison un plateau-table 1 horizontal et une scie et comporte une lame de scie 6 disposé en position verticale, une plaque de guidage 8 réglable parallèle au plan de coupe de la lame de la scie 6 et un rouleau réglable 9 d'axe vertical.

EP 0 420 769 A2

## PROCÉDÉ DE TRANCHAGE D'UN PANNEAU EN FIBRES MINÉRALES ET DISPOSITIF POUR SA MISE EN OEUVRE

La présente invention concerne un procédé de tranchage d'un panneau en fibres minérales, et un dispositif pour sa mise en oeuvre.

Le but d'un tel tranchage est notamment de fournir des panneaux, d'une épaisseur déterminée, destinés aux plafonds des appartements, bureaux ou autres similaires, de manière à être utilisés pour la réalisation d'un chauffage radian.

Or, il est nécessaire, pour une telle utilisation de ce type de panneaux, d'obtenir une planéité parfaite de la surface de coupe, de façon à pouvoir y introduire plaqué contre ceux-ci, soit un élément chauffant électrique, soit un film polyane pare-vapeur.

Il est habituel, pour effectuer le tranchage de tels panneaux, d'employer des scies de type connu disposées horizontalement.

Ces scies placées dans cette position présentent l'inconvénient de se déformer sous l'effet de la gravité, ce qui se traduit par une irrégularité de coupe, et notamment par la formation d'ondulations ou de vagues.

De plus, ces scies sont souvent encombrantes, et ne sont pas toujours réglables facilement en fonction des différentes épaisseurs de coupe, ce qui entraîne des difficultés importantes, particulièrement dans le cas de réalisation de tels panneaux.

Pour remédier à ces inconvénients, il est connu d'utiliser des systèmes de réglages complexes, adaptés à ces différents types de scies. Toutefois, de tels systèmes ne permettent pas d'éviter les irrégularités de coupe.

La présente invention vise à remédier à ces inconvénients en fournissant un procédé de tranchage d'un panneau en libres minérales et un dispositif pour sa mise en oeuvre, qui permettent d'obtenir une découpe parfaitement plane, tout en étant simple de réglage, facile à utiliser, et d'un encombrement réduit.

A cette fin, le procédé de tranchage, dans le sens de son épaisseur, d'un panneau en libre minérale, consiste à amener ce panneau en position verticale et à le trancher dans cette position, par déplacement relatif vis à vis d'un outil de tranchage également d'orientation verticale.

Ce Procédé permet d'éviter la déformation des lames de scies, sous l'effet de la gravité, et favorise de cette façon, un régularité de la coupe.

Avantageusement, le panneau placé en position verticale est déplaçable vis à vis d'un outil de tranchage fixe d'orientation verticale.

Selon une variante d'exécution, c'est l'outil de tranchage d'orientation verticale, qui se déplace vis à vis d'un panneau fixe, placé en position verticale.

Selon une forme préférée de réalisation, le dispositif pour la mise en oeuvre du procédé du type comprenant en combinaison, un plateau table horizontal de forme rectangulaire et une scie, est caractérisé en ce que la lame de la scie est disposée en position verticale perpendiculairement au plateau table, ce qui favorise une découpe précise.

Selon une caractéristique intéressante de l'invention, ce dispositif comporte une plaque de guidage verticale, orientée parallèlement au plan de coupe de la lame de la scie, et fixée perpendiculairement par l'un de ses bords longitudinaux sur le plateau table.

Avantageusement, la plaque de guidage est montée de façon réglable dans une direction perpendiculaire au plan de coupe, afin d'obtenir différentes épaisseurs de coupe, et un parfait maintien du panneau à trancher.

Selon une autre caractéristique de l'invention, le dispositif comporte un rouleau d'axe vertical, orienté parallèlement un plan de coupe, et fixé perpendiculairement au plateau-table par des moyens mécaniques réglables.

Ce réglage en fonction des différentes épaisseurs des panneaux à trancher permet d'obtenir une parfaite régularité de coupe et de maintenir lesdits panneaux régulièrement plaqués contre la plaque de guidage.

Avantageusement la rotation de ce rouleau en fonction de la poussée exercée par l'opérateur sur le panneau, assure une parfaite planéité de la surface tranchée.

De plus, la vitesse de rotation de la lame et la vitesse d'avancement du panneau sont fonction de la densité de la structure du panneau.

Le débit de travail de la machine est de cette façon directement lié à la densité de la structure du panneau à trancher, ce qui assure une plus grande régularité de la coupe.

Avantageusement, la largeur de la lame de la scie utilisée est de 8 mm. Le choix de la dimension de lame est fonction de la nature et de la densité de la structure du panneau à trancher, de manière à obtenir un rendement maximal du dispositif.

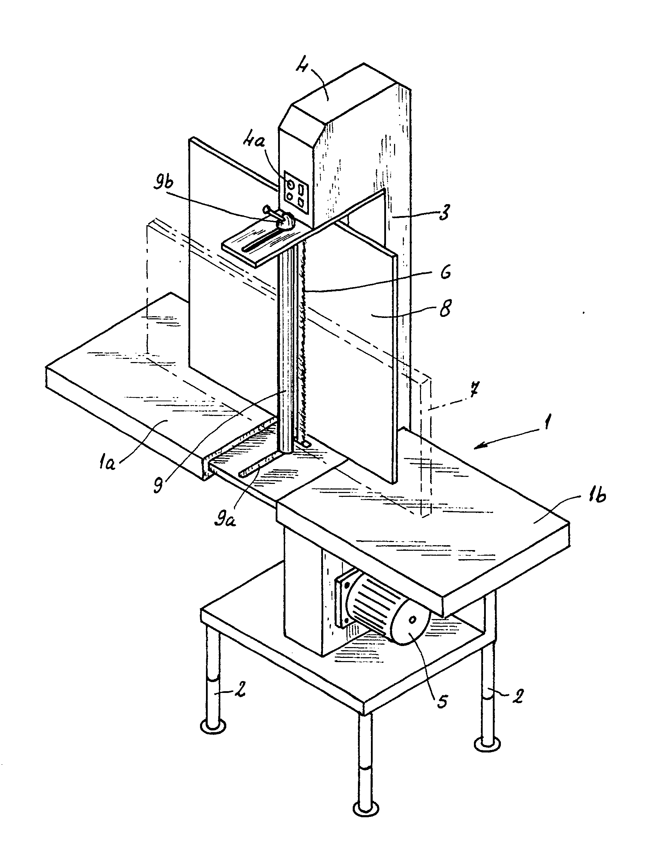

De toute façon, l'invention sera bien comprise à l'aide de la description qui suit, en référence au dessin schématique annexé dont la figure unique représente en perspective une forme d'exécution de ce dispositif de tranchage.

Ce dispositif comprend un plateau-table 1, de forme rectangulaire, disposé horizontalement. Ce plateau-table 1 est supporté par des pieds coulissants 2, à une hauteur variable du sol, assurant ainsi sa parfaite adaptation aux conditions d'utilisation.

La longueur du plateau-table 1 est substantiellement plus grande que sa largueur, et peut être réglée, en fonction de la dimension du panneau à trancher, grâce à un coulissement, l'une par rapport à l'autre, des deux parties 1a et 1b constitutives du plateau-table 1, limitant de cette manière l'encombrement du dispositif.

Une colonne support 3 verticale, constituée par une poutrelle métallique carrée, est placée perpendiculairement au milieu du plateau-table 1.

Cette colonne 3 est agencée de manière connue. Elle comporte, dans sa partie basse, un moteur 5 pour assurer l'entraînement de la scie, et, dans sa partie haute, un boîtier 4 de forme parallépipèdique qui renferme un dispositif électronique de commande. Un interrupteur 4a permet sa mise en fonctionnement.

Un dispositif mécanique connu et réglable permet la fixation d'une lame d'une scie à ruban 6.

Cette lame de scie à ruban 6 est disposée verticalement, ce qui, après introduction du panneau 7 dans sa position verticale et son déplacement par rapport à celle-ci, permet de réaliser un tranchage dans le sens de son épaisseur suivant une surface qui est parfaitement plane.

Une plaque de guidage 8 verticale est orientée parallèlement au plan de coupe de la lame de la scie 6. Cette plaque est montée par l'un de ses bords longitudinaux, de façon réglable, à l'aide de moyens mecaniques, perpendiculairement au plateau-table 1. Cela permet d'avoir différentes épaisseurs de coupe et de fournir un parfait appui au panneau à trancher.

Un rouleau réglable 9 d'axe vertical est placé parallèlement au plan de coupe de la lame 6 de la scie. Il est fixé, perpendiculairement au plateau-table 1, dans sa partie basse par l'intermédiaire de moyens mécaniques, déplaçables sur le plateau-table 1 tranversalement à la direction de déplacement du panneau, dans une glissière 9a munie de moyens d'arrêt 9b, et dans sa partie haute par un système d'accrochage 9c, non représenté sur la figure, pouvant coulisser sur la plaque de guidage 8.

Ce rouleau permet de maintenir le panneau régulièrement plaqué contre la plaque de guidage 8 et sa rotation en fonction de la poussée exercée par l'opérateur sur le panneau assure un avancement uniforme du panneau, ce qui favorise la régularité de la coupe.

Comme il va de soi, l'invention ne se limite pas à la seule forme d'exécution de ce dispositif pour la mise en oeuvre du procédé de tranchage de panneau en libres minérales qui à été décrite ci-dessus à titre d'exemple, elle embrasse au contraire, toutes les variantes de réalisation et d'application respectant le même principe. C'est ainsi, qu'il est possible de déplacer l'outil de tranchage, d'orientation verticale, vis à vis d'un panneau fixe placé en position verticale.

**Revendications**

1. Procédé de tranchage dans le sens de son épaisseur d'un panneau en fibres minérales caractérisé en ce qu'il consiste à amener ce panneau, en position verticale, et à le trancher dans cette position, par déplacement relatif vis à vis d'un outil de tranchage également d'orientation verticale.

2. Procédé selon la revendication 1, caractérisé en ce qu'il consiste à déplacer le panneau, amené en position verticale, vis à vis d'un outil de tranchage fixe d'orientation verticale.

3. Procédé selon la revendication 1, caractérisé en ce qu'il consiste à déplacer l'outil de tranchage, d'orientation verticale, vis à vis d'un panneau fixe amené en position verticale.

4. Dispositif pour la mise en oeuvre du procédé selon la revendication 1, du type comprenant, en combinaison, un plateau-table horizontal (1) de forme rectangulaire et une scie, caractérisé en ce que la lame de la scie (6) est disposée en position verticale perpendiculairement au plateau-table (1).

5. Dispositif selon la revendication 4, caractérisé en ce qu'il comprend une plaque de guidage (8), orientée parallèlement au plan de coupe de la lame de scie (6), et fixée perpendiculairement par l'un de ses bords longitudinaux sur le plateau-table (1).

6. Dispositif selon l'une des revendications 4 et 5, caractérisé en ce que la plaque de guidage (8) est montée de façon réglable, dans une direction perpendiculaire au plan de coupe.

7. Dispositif selon la revendication 4, caractérisé en ce qu'il comprend un rouleau d'orientation verticale (9) orienté parallèlement au plan de coupe (de la lame de la scie (6), et fixé perpendiculairement au plateau-table (1) par des moyens mecaniques réglables.